# EUROPEAN PATENT APPLICATION

(11) **EP 4 510 375 A1**
(43) Date of publication of application: **19.02.2025**
(21) Application number: 22963033.0
(22) Date of filing: 26.10.2022
(51) Int. Cl.: H01M 50/609, H01M 50/627, H01M 50/593

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: LEI, Yuyong, Ningde, Fujian 352100 (CN); GUO, Zhijun, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2022/127578
(87) International publication number: WO 2024/087047

(57) **Abstract**

Embodiments of the present application provide a battery cell, a battery, and an electrical device. The battery cell comprises: an electrode assembly; and a housing, used for accommodating the electrode assembly, a liquid injection hole being formed in a first wall of the housing. The electrode assembly comprises a main body part, and an opening of the liquid injection hole close to the interior of the housing and the orthographic projection of the main body part on the first wall are arranged in a staggered mode. According to the technical solution provided by the present application, an electrolyte can be conveniently and quickly injected into the battery cell, so that the battery production efficiency is improved.

## Description

### TECHNICAL FIELD

This application relates to the technical field of batteries, and in particular, to a battery cell, a battery, and an electrical device.

### BACKGROUND

Energy conservation and emission reduction are key to sustainable development of the automobile industry. Based on this situation, electric vehicles have become an important part of the sustainable development of the automobile industry by virtue of energy saving and environmental friendliness. Battery technology is crucial to development of electric vehicles.

An electrolyte solution in a battery is essential to the performance of the battery. The injection of the electrolyte solution is a time-consuming processing step during production of the battery. Therefore, how to quickly inject the electrolyte solution to improve the production efficiency of batteries is a pressing challenge.

### SUMMARY

Some embodiments of this application provide a battery cell, a battery, and an electrical device to conveniently and quickly inject an electrolyte solution into the battery cell, thereby improving production efficiency of batteries.

According to a first aspect, a battery cell is provided, including: an electrode assembly; and a housing, configured to accommodate the electrode assembly. An injection hole is provided on a first wall of the housing. The electrode assembly includes a body portion. An orthographic projection of an opening, close to an interior of the housing, of the injection hole is staggered from an orthographic projection of the body portion on the first wall.

In an embodiment of this application, an injection hole is provided on the first wall of the housing of the battery cell. The orthographic projection of the opening, close to the interior of the housing, of the injection hole is staggered from the orthographic projection of the body portion of the electrode assembly on the first wall on which the injection hole is provided. During the injection, the battery cell "lies flat". In other words, the first wall of the housing is perpendicular to the direction of gravity. The electrolyte solution is injected into the housing through the injection hole along the direction of gravity. This speeds up the diffusion speed of the electrolyte solution in the housing, and makes the electrolyte solution reach the electrode assembly more quickly. In addition, because the orthographic projection of the opening, close to the interior of the housing, of the injection hole is staggered from the orthographic projection of the body portion of the electrode assembly on the first wall on which the injection hole is provided, the electrolyte solution is prevented from directly impacting the body portion of the electrode assembly during injection, thereby avoiding damage to the electrode assembly caused by the impact on the electrode assembly due to a high speed during injection. The technical solution of this application enables the electrolyte solution to diffuse in the housing at a high speed after the electrolyte solution is injected into the housing through the injection hole along the direction of gravity when the battery cell is in a "lying flat" state, thereby saving the time spent on production and assembling of the battery cell, and improving the production efficiency of the battery.

In a possible embodiment, the electrode assembly further includes a tab extending from the body portion. The battery cell further includes a tab holder. The tab holder and the body portion are arranged along a first direction. At least a part of the tab is accommodated in the tab holder.

The tab holder is disposed on the battery cell, and the tab holder and the body portion of the electrode assembly are arranged along the first direction. The tab of the electrode assembly extends out of the body portion. At least a part of the tab is accommodated in the tab holder. The tab holder plays a protective role for the tab. At the same time, the tab holder can also fix the position of the tab to some extent, and ensure the stability of the electrical connection between the tab and the electrode terminal.

In a possible embodiment, the tab holder includes two first holder walls disposed opposite to each other along a second direction. An orthographic projection of an opening, close to the interior of the housing, of the injection hole on a plane of an outer surface of the first holder wall does not extend beyond the first holder wall. The second direction is perpendicular to the first direction and the first wall.

The orthographic projection of the opening, close to the interior of the housing, of the injection hole on the plane of the outer surface of the first holder wall of the tab holder does not extend beyond the first holder wall, indicating that in the first direction, the position of the opening, close to the interior of the housing, of the injection hole does not extend beyond the range of the tab holder. This prevents the electrolyte solution from directly impacting the electrode assembly when the electrolyte solution is injected into the housing through the injection hole, thereby ensuring the certainty and stability of the injection operation.

In a possible embodiment, a first through-hole is provided on a first holder wall, close to the injection hole, of the tab holder. The first through-hole and the injection hole are disposed opposite to each other in the second direction.

The first through-hole is provided on the first holder wall, close to the injection hole, of the tab holder. The first through-hole is disposed opposite to the injection hole. In this way, after being injected into the housing through the injection hole, the electrolyte solution can enter the tab holder through the first through-hole.

In a possible embodiment, a cross-sectional area of the first through-hole is not less than a cross-sectional area of the opening, close to the interior of the housing, of the injection hole.

The cross-sectional area of the first through-hole is not less than the cross-sectional area of the opening, close to the interior of the housing, of the injection hole. This ensures that the space is sufficient for the flow of the electrolyte solution through the first through-hole after the electrolyte solution enters the housing, and ensures the electrolyte solution to enter the tab holder quickly and diffuse faster in the housing.

In a possible embodiment, the tab holder further includes a second holder wall oriented toward the electrode assembly. The second holder wall includes a first sub-wall and a second sub-wall. The first direction is perpendicular to the first sub-wall. The second sub-wall is inclined against the first sub-wall to form a clearance space for a root of the tab. The root of the tab is disposed in the clearance space.

The second sub-wall of the second holder wall is inclined against the first sub-wall to form a clearance space for the root of the tab, thereby preventing the second holder wall of the tab holder from pressing down on the root of the tab for lack of a gap between the second holder wall and the body portion when the second holder wall comes in contact with the body portion of the electrode assembly. The pressing is prone to damage the tab and cause a short circuit. In addition, the first sub-wall disposed ensures a region of the second holder wall, which does not need to avoid the root of the tab, to keep a stable connection to the body portion of the electrode assembly, thereby ensuring the overall structural stability of the battery cell.

In a possible embodiment, the first holder wall and the second holder wall close in to form a tab accommodation space. A tab clearance groove is disposed on the second holder wall. At least a part of the tab passes through the tab clearance groove and is accommodated in the tab accommodation space.

The first holder wall and the second holder wall close in to form a tab accommodation space. At least a part of the tab passes through the tab clearance groove of the second holder wall and is accommodated in the tab accommodation space, thereby utilizing the space of the tab holder efficiently, avoiding a need to waste another space in the housing to accommodate the tab, and saving the space occupied by the battery cell as a whole. In addition, the tab accommodation space accommodates the tab, and the first holder wall and the second holder wall also play a protective role for the tab, thereby preventing the tab from being damaged during use of the battery and ensuring the safety of the battery.

In a possible embodiment, a fluid channel is disposed on the second holder wall, so that an electrolyte solution is able to flow through the fluid channel to the electrode assembly.

The fluid channel is disposed on the second holder wall, so that the electrolyte solution injected into the tab holder can flow through the fluid channel to both sides of the electrode assembly, and the electrolyte solution can flow and diffuse faster in the housing.

In a possible embodiment, a plurality of the fluid channels are disposed. The plurality of fluid channels run through the second holder wall along the first direction.

The plurality of fluid channels that run through the second holder wall can further speed up diffusion of the electrolyte solution in the housing.

In a possible embodiment, the tab holder further includes a liquid blocking component. In the second direction, the liquid blocking component is disposed between the two first holder walls and disposed opposite to the first through-hole.

The liquid blocking component is disposed opposite to the first through-hole, so that the electrolyte solution impacts the liquid blocking component when being injected into the tab holder through the first through-hole. In this way, the electrolyte solution is prevented from directly impacting the tab accommodated in the tab holder, thereby avoiding damage to the tab.

In a possible embodiment, the injection hole includes a first hole section, a second hole section, and a third hole section. Along a direction toward the interior of the housing, the first hole section, the second hole section, and the third hole section are arranged in sequence, with a hole diameter diminishing progressively.

Along the direction toward the interior of the housing, the first hole section, the second hole section, and the third hole section of the injection hole are arranged in sequence, and the hole diameter diminishes progressively, so that the injection hole includes a plurality of hole sections of different diameters to facilitate an operation of sealing the injection hole upon completion of injection.

In a possible embodiment, the battery cell includes a sealing component. The sealing component is configured to seal the third hole section after electrolyte injection. The third hole section close to the interior of the housing is sealed by using the sealing component, thereby preventing the electrolyte solution from flowing out of the battery cell through the injection hole.

In a possible embodiment, the sealing component is welded to the housing to seal the third hole section. The sealing component is connected to the housing by welding, so as to seal the third hole section. The welding connection is characterized by strong bonding and high stability and firmness of connection, and makes the sealing component seal the third hole section more firmly.

In a possible embodiment, the sealing component includes a welding portion. The welding portion is accommodated in the second hole section and connected to a sidewall of the second hole section by welding. An excess part of a weld mark exceeding the second hole section is accommodated in the first hole section, where the weld mark is formed by welding and connecting the welding portion to the sidewall of the second hole section.

The welding portion of the sealing component is connected to the sidewall of the second hole section by welding, so as to connect the sealing component to the housing and seal the third hole section. In addition, the welding portion is accommodated in the second hole section, thereby preventing the sealing component from protruding from the outer surface of the first wall, and preventing the sealing component from puncturing the insulation film on the outer surface of the housing. In addition, the welding portion is connected to the sidewall of the second hole section by welding to form a weld mark. A part of the weld mark is accommodated in the second hole section, and another part of the weld mark exceeds the second hole section. The excess part of the weld mark exceeding the second hole section is accommodated in the first hole section, thereby preventing the weld mark from protruding from the outer surface of the first wall, preventing the weld mark from puncturing the insulation film on the outer surface of the housing, avoiding a short circuit of the battery, and ensuring the safety of the battery.

In a possible embodiment, in the second direction, a dimension of the first hole section is greater than 0.1 mm.

In the second direction, the dimension of the first hole section needs to be large enough to accommodate all the excess weld mark exceeding the second hole section. Based on general sizes of weld marks formed by welding, the dimension of the first hole section in the second direction needs to be set to a value greater than 0.1 mm.

In a possible embodiment, the battery cell further includes an insulation shell. The insulation shell is disposed between the housing and the electrode assembly. A second through-hole is provided on the insulation shell. In the second direction, the second through-hole is disposed opposite to the injection hole.

As a component that prevents a short circuit of the battery and ensures safety of the battery, the insulation shell is disposed between the housing and the electrode assembly. A second through-hole opposite to the injection hole is disposed on the insulation shell, thereby preventing the insulation shell from blocking the flow path of the electrolyte solution during injection of the electrolyte solution, and speeding up the diffusion of the electrolyte solution in the housing.

In a possible embodiment, a plurality of first infiltration holes arranged along the first direction are provided on the insulation shell.

The plurality of first infiltration holes provided on the insulation shell facilitate rapid diffusion of the electrolyte solution in the housing, save the time spent in assembling the battery cell, and improve the efficiency of assembling the battery.

In a possible embodiment, the battery cell further includes an insulation plate. In the second direction, the insulation plate is disposed between the housing and the electrode assembly. A third through-hole is provided on the insulation plate. In the second direction, the third through-hole is disposed opposite to the injection hole.

The insulation plate disposed in the battery cell plays a role in supporting the electrode assembly and preventing deformation of the electrode assembly on the one hand, and plays a role in insulating, avoiding a short circuit of the battery, and ensuring safety of the battery on the other hand. The third through-hole opposite to the injection hole is provided on the insulation plate, thereby preventing the insulation plate from blocking the flow path of the electrolyte solution during injection of the electrolyte solution, and speeding up the diffusion of the electrolyte solution in the housing.

In a possible embodiment, a plurality of second infiltration holes arranged along the first direction are provided on the insulation plate.

The plurality of second infiltration holes provided on the insulation plate facilitate rapid diffusion of the electrolyte solution in the housing, save the time spent in assembling the battery cell, and improve the efficiency of assembling the battery.

In a possible embodiment, in the first direction, first infiltration holes of the insulation shell are staggered from the second infiltration holes of the insulation plate, so that an insulation component is ensured to be available between the electrode assembly and the housing to avoid a short circuit of the battery.

In a possible embodiment, the battery cell further includes an end cap configured to fit and cover an opening of the housing. An electrode terminal is disposed on the end cap. In the first direction, the tab holder is disposed between the end cap and the body portion. The tab of the electrode assembly passes through the tab holder and is electrically connected to the electrode terminal.

The end cap fits and covers the opening of the housing to ensure the hermeticity of the housing and prevent external impurities from entering the housing through the opening and from impairing the performance of the battery. The tab of the electrode assembly passes through the tab holder and is electrically connected to the electrode terminal on the end cap, thereby implementing output and input of electrical energy of the battery.

According to a second aspect, a battery is provided, including the battery cell disclosed in the first aspect or any embodiment of the first aspect.

According to a third aspect, an electrical device is provided, including the battery disclosed in the second aspect or any embodiment of the second aspect. The battery is configured to provide electrical energy.

In the technical solution of this application, an injection hole is provided on the housing of the battery cell. The orthographic projection of the opening, close to the interior of the housing, of the injection hole is staggered from the orthographic projection of the body portion of the electrode assembly on the first wall on which the injection hole is provided. During the injection, the battery cell "lies flat". In other words, the first wall of the housing is perpendicular to the direction of gravity. The electrolyte solution is injected into the housing through the injection hole along the direction of gravity. This speeds up the diffusion speed of the electrolyte solution in the housing, and makes the electrolyte solution reach the electrode assembly more quickly. In addition, because the orthographic projection of the opening, close to the interior of the housing, of the injection hole is staggered from the orthographic projection of the body portion of the electrode assembly on the first wall on which the injection hole is provided, the electrolyte solution is prevented from directly impacting the body portion of the electrode assembly during injection, thereby avoiding damage to the electrode assembly caused by the impact on the electrode assembly due to a high speed during injection. The technical solution of this application enables the electrolyte solution to diffuse in the housing at a high speed after the electrolyte solution is injected into the housing through the injection hole along the direction of gravity when the battery cell is in a "lying flat" state, thereby saving the time spent on production and assembling of the battery cell, and improving the production efficiency of the battery.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to an embodiment of this application;
FIG. 2 is a schematic structural diagram of a battery according to an embodiment of this application;
FIG. 3 is an exploded view of a battery cell according to an embodiment of this application;
FIG. 4 is a close-up view of a tab holder shown in FIG. 3;
FIG. 5 is a partial cross-sectional view of a battery cell according to an embodiment of this application; and
FIG. 6 is a schematic structural diagram of a battery cell according to an embodiment of this application.

The drawings are not drawn to scale.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In an embodiment of this application, the types of battery cells may include a lithium-ion battery, a lithium-sulfur battery, a sodium-lithium-ion battery, a sodium-ion battery, a magnesium-ion battery, or the like, without being limited herein. The battery cell may be in various shapes such as cylindrical, flat, cuboidal or other shapes. The shape of the battery cell is not limited herein. Depending on the form of packaging, the battery cell is typically classed into three types: cylindrical battery cell, prismatic battery cell, and pouch-type battery cell, without being limited in embodiments of this application.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell may include an electrode assembly and an electrolyte solution. The electrode assembly includes a positive electrode plate, a negative electrode plate, and a separator. The battery cell works primarily by relying on shuttling of metal ions between the positive electrode plate and the negative electrode plate. The positive electrode plate includes a positive current collector and a positive active material layer. A surface of the positive current collector is coated with the positive active material layer. Of the current collector, a part not coated with the positive active material layer protrudes from a part coated with the positive active material layer, and the part not coated with the positive active material layer serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the current collector, a part not coated with the negative active material layer protrudes from a part coated with the negative active material layer, and the part not coated with the negative active material layer serves as a negative tab. The negative current collector may be made of copper, and the negative active material may be graphite, carbon, silicon, or the like. To prevent a large electrical current from tripping the circuit, a plurality of positive tabs are stacked together, and a plurality of negative tabs are stacked together. The separator may be made of a material such as polypropylene (PP) or polyethylene (PE). In addition, the electrode assembly may be of a jelly-roll type structure or a stacked type structure, without being limited herein.

The electrolyte solution serves to conduct ions between the positive electrode and the negative electrode of a battery, and is the guarantee for the battery to achieve the advantages such as a high voltage and a high specific energy. Deficiency of electrolyte solution inside the battery may result in problems such as a high internal resistance, inability to exert the full capacity of the positive electrode, lithium plating on the negative electrode, and poor cycle performance.

The injection of the electrolyte solution is a time-consuming processing step during production of the battery. To ensure sufficient electrolyte solution inside a battery cell, it is necessary to inject an appropriate amount of electrolyte solution into the housing of the battery cell for several times in a process of assembling the battery cell. Each injection is not started until the electrolyte solution injected previously has fully diffused in the housing. The injection operation is repeated several times until the electrolyte solution fills the internal space of the battery cell.

In the prior art, the electrolyte solution is typically injected through an injection hole provided on the end cap of the battery cell. With the development of the production technology of batteries, the battery cell needs to "lie flat" for processing and assembling so as to facilitate the assembling of the battery cell during production of the battery. To be specific, the battery cell is laid in such a way that the opening of the housing of the battery cell is positioned laterally, and the end cap fits and covers the lateral opening of the housing. In this case, if the injection hole is provided on the end cap, that is, if the electrolyte solution is injected from one side of the battery cell, the initial injection direction is different from the direction of gravity when the electrolyte solution is injected into the battery cell through the injection hole, thereby reducing the diffusion speed of the electrolyte solution in the battery cell, and increasing the injection time. In addition, in the case of injecting the electrolyte solution from one side of the battery cell, when the electrolyte solution in the housing reaches the same height as that in the injection hole, further injection of the electrolyte solution makes the electrolyte solution in the housing flow out of the injection hole, thereby making the housing unable to be fully filled. The amount of electrolyte solution in the housing is insufficient, thereby impairing the performance of the battery. In addition, injecting the electrolyte solution from one side of the battery cell increases the difficulty of operation.

In view of the situation above, an embodiment of this application provides a battery cell. An injection hole is provided on a first wall of a housing of the battery cell. The orthographic projection of the opening, close to the interior of the housing, of the injection hole is staggered from the orthographic projection of the body portion of the electrode assembly on the first wall. During the injection, the battery cell "lies flat". In other words, the first wall of the housing is perpendicular to the direction of gravity. The electrolyte solution is injected into the housing through the injection hole along the direction of gravity. This speeds up the diffusion speed of the electrolyte solution in the housing, and makes the electrolyte solution reach the electrode assembly more quickly. In addition, because the orthographic projection of the opening, close to the interior of the housing, of the injection hole is staggered from the orthographic projection of the body portion of the electrode assembly on the first wall on which the injection hole is provided, the electrolyte solution is prevented from directly impacting the body portion of the electrode assembly during injection, thereby avoiding damage to the electrode assembly caused by the impact on the electrode assembly due to a high speed during injection. The technical solution of this application enables the electrolyte solution to diffuse in the housing at a high speed after the electrolyte solution is injected into the housing through the injection hole along the direction of gravity when the battery cell is in a "lying flat" state, thereby saving the time spent on production and assembling of the battery cell, and improving the production efficiency of the battery.

The technical solutions described in some embodiments of this application are all applicable to various devices that use a battery. Examples of the devices are: mobile phone, portable device, laptop computer, electric power cart, electrical toy, electrical tool, electric vehicle, watercraft, and spacecraft. For example, the spacecraft includes an airplane, a rocket, a space shuttle, a spaceship, and the like.

Understandably, the technical solutions described in the embodiments of this application are not only applicable to the devices described above, but also applicable to all battery-powered devices. However, for brevity, the following embodiments are described by using an electric vehicle as an example.

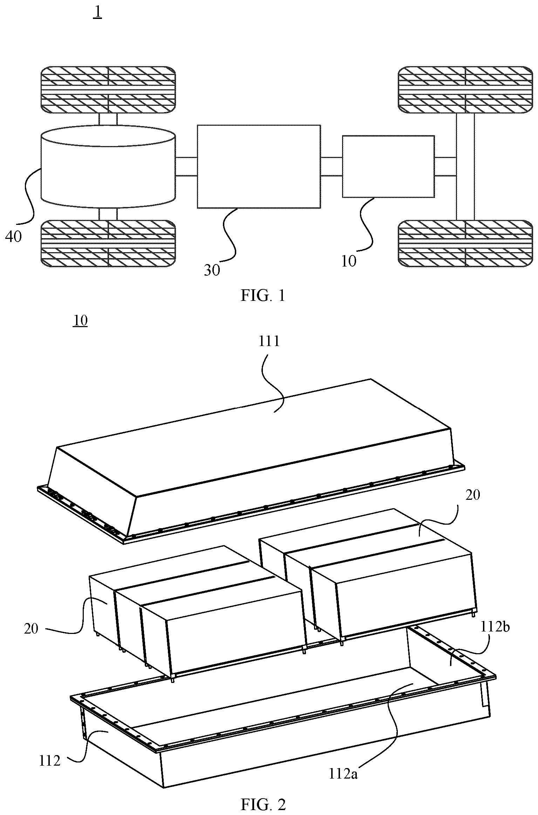

For example, as shown in FIG. 1, which is a schematic structural diagram of a vehicle 1 according to an embodiment of this application, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power usage requirements, the battery 10 may include a plurality of battery cells. For example, as shown in FIG. 2, which is a schematic structural diagram of a battery 10 according to an embodiment of this application, the battery 10 may include a plurality of battery cells 20. The battery 10 may further include a box (or referred to as a container). The interior of the box is a hollow structure. A plurality of battery cells 10 are accommodated in the box. As shown in FIG. 2, the box may include two parts, herein referred to as a first part 111 and a second part 112 respectively. The first part 111 and the second part 112 are snap-fitted together. The shapes of the first part 111 and the second part 112 may depend on the shape of a plurality of battery cells 20 combined. An opening may be provided on both the first part 111 and the second part 112. For example, the first part 111 and the second part 112 each may be a hollow cuboid, and each may include one opened surface. The opening of the first part 111 is opposite to the opening of the second part 112. The first part 111 and the second part 112 are snap-fitted to each other to form a box that includes a closed cavity. The box may include a bottom plate 112a, a side plate 112b, and a beam. The plurality of battery cells 20 are combined and connected in parallel, series, or series- and-parallel pattern, and then placed into the box that is formed by snap-fitting the first part 111 and the second part 112.

Optionally, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box. Optionally, the conductive mechanism may also belong to the busbar component.

Depending on different power requirements, the number of battery cells 20 may be set to any value. A plurality of battery cells 20 may be connected in series, parallel, or series-and- parallel pattern to achieve a relatively high capacity or power.

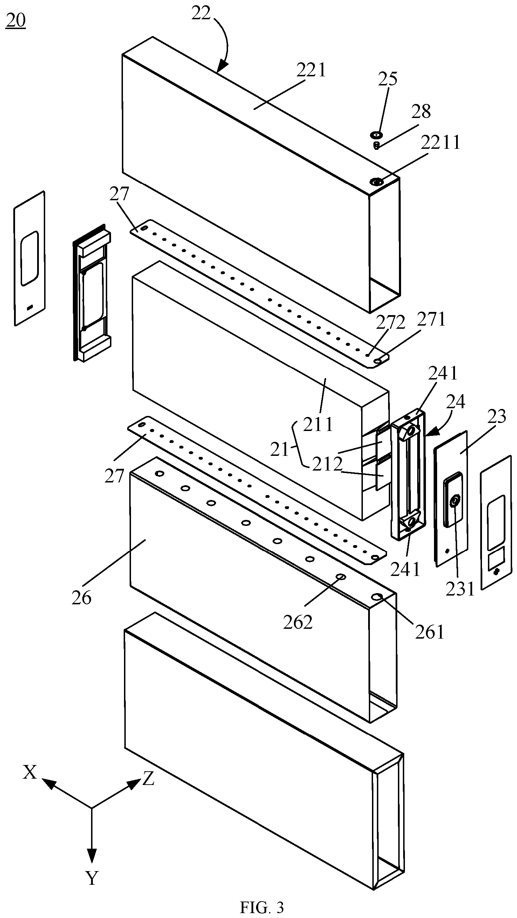

As shown in FIG. 3, which is an exploded view of a battery cell 20 according to an embodiment of this application, the battery cell 20 includes an electrode assembly 21 and a housing 22.

Specifically, the housing 22 is configured to accommodate the electrode assembly 21. An injection hole 2211 is provided on a first wall 221 of the housing 22.

The electrode assembly 21 includes a body portion 211. An orthographic projection of an opening, close to an interior of the housing 22, of the injection hole 2211 is staggered from an orthographic projection of the body portion 211 on the first wall 221.

The electrolyte solution is a carrier for ion transport in the battery. The electrolyte solution typically includes a metal salt and an organic solvent. The electrolyte solution serves to conduct ions between the positive electrode and the negative electrode of a battery, and is the guarantee for the battery to achieve the advantages such as a high voltage and a high specific energy. The electrolyte is typically prepared from a high-purity organic solvent, an electrolyte metal salt, a necessary additive, and other ingredients. The ingredients are mixed at a specified ratio under specified conditions.

Here, the first wall 221 of the housing 22 means a sidewall of the housing 22 that peripherally forms an accommodation space for accommodating the electrode assembly 21. The first wall 221 shown in FIG. 3 is a small-area sidewall among the sidewalls of the housing 22. Understandably, the first wall 221 may be a large-area sidewall among the sidewalls of the housing 22 instead, depending on the actual situation in the process of assembling the battery cell. However, it is hereby noted that no matter whether the first wall 221 is a small-area sidewall among the sidewalls of the housing 22 or a large-area sidewall among the sidewalls of the housing 22, the first wall 221 of the housing 22 needs to be perpendicular to the direction of gravity during injection. The electrolyte solution is injected into the housing 22 along the direction of gravity through the liquid injection hole 2211 on the first wall 221.

Here, the body portion 211 of the electrode assembly 21 is formed by stacking or winding a plurality of positive electrode plates, separators, and negative electrode plates in sequence.

"Lying flat" in this application means that, during injection of the electrolyte injection into the battery cell 20, the battery cell 20 is placed in such a way that the opening of the housing 22 is laterally oriented, different from the common practice of vertical placement of the battery cell 20 in which the opening of the housing 22 faces upward.

In an embodiment of this application, an injection hole 2211 is provided on the first wall 221 of the housing 22 of the battery cell 20. The orthographic projection of the opening, close to the interior of the housing 22, of the injection hole 2211 is staggered from the orthographic projection of the body portion 211 of the electrode assembly 21 on the first wall 221 on which the injection hole 2211 is provided. During the injection, the battery cell 20 "lies flat". In other words, the first wall 221 of the housing 22 is perpendicular to the direction of gravity. The electrolyte solution is injected into the housing 22 through the injection hole 2211 along the direction of gravity. This speeds up the diffusion speed of the electrolyte solution in the housing 22, and makes the electrolyte solution reach the electrode assembly 21 more quickly. In addition, because the orthographic projection of the opening, close to the interior of the housing 22, of the injection hole 2211 is staggered from the orthographic projection of the body portion 211 of the electrode assembly 21 on the first wall 221 on which the injection hole 2211 is provided, the electrolyte solution is prevented from directly impacting the electrode assembly 21 during injection, thereby avoiding damage to the electrode assembly 21 caused by the impact on the electrode assembly 21 due to a high speed during injection. The technical solution of this application enables the electrolyte solution to diffuse in the housing 22 at a high speed after the electrolyte solution is injected into the housing 22 through the injection hole 2211 along the direction of gravity when the battery cell 20 is in a "lying flat" state, thereby saving the time spent on production and assembling of the battery cell 20, and improving the production efficiency of the battery 10.

Optionally, in an embodiment of this application, as shown in FIG. 3, the battery cell 20 further includes an end cap 23. The end cap is configured to fit and cover the opening of the housing 22 to ensure the hermeticity of the housing 22 and prevent external impurities from entering the housing 22 through the opening and from impairing the performance of the battery 10.

Specifically, an electrode terminal 231 is disposed on the end cap 23. The electrode terminal is electrically connected to the tab 212 of the electrode assembly 21, where the tab extends from the body portion 211, thereby implementing the input and output of electrical energy of the battery 10.

Optionally, in an embodiment of this application, still referring to FIG. 3, the battery cell 20 further includes a tab holder 24. The tab holder 24 and the body portion 211 are arranged along a first direction x. At least a part of the tab 212 is accommodated in the tab holder 24.

The tab holder 24 is disposed on the battery cell 20. The tab holder 24 and the body portion 211 of the electrode assembly 21 are arranged along the first direction x. The tab 212 of the electrode assembly 21 is at least partially accommodated in the tab holder 24. The tab holder 24 plays a protective role for the tab 212. At the same time, the tab holder 24 can also fix the position of the tab 212 to some extent, and ensure the stability of the electrical connection between the tab 212 and the electrode terminal 231.

Optionally, as shown in FIG. 3, in the first direction x, the tab holder 24 is disposed between the end cap 23 and the body portion 211. The tab 212 of the electrode assembly 21 passes through the tab holder 24 and is electrically connected to the electrode terminal 231.

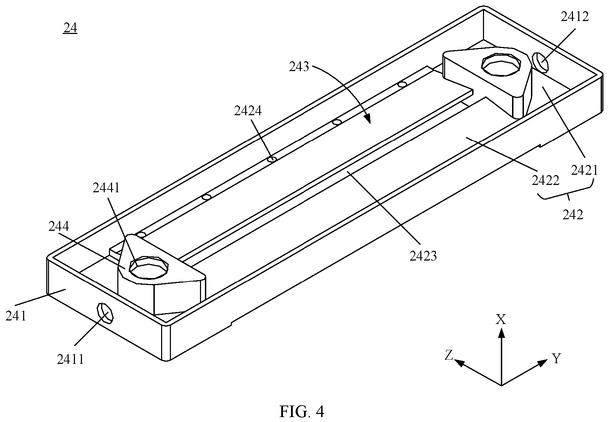

Optionally, in an embodiment of this application, as shown in FIG. 3 and FIG. 4, the tab holder 24 includes two first holder walls 241 disposed opposite to each other along a second direction y. An orthographic projection of an opening, close to the interior of the housing 22, of the injection hole 2211 on a plane of an outer surface of the first holder wall 241 does not extend beyond the first holder wall 241. The second direction y is perpendicular to the first direction x and the first wall 221.

The orthographic projection of the opening, close to the interior of the housing 22, of the injection hole 2211 on the plane of the outer surface of the first holder wall 241 of the tab holder 24 does not extend beyond the first holder wall 241, indicating that in the first direction x, the position of the opening, close to the interior of the housing 22, of the injection hole 2211 does not extend beyond the range of the tab holder 24. This prevents the electrolyte solution from directly impacting the electrode assembly 21 when the electrolyte solution is injected into the housing 22 through the injection hole 2211, thereby ensuring the certainty and stability of the injection operation.

Optionally, in an embodiment of this application, as shown in FIG. 4, the first through-hole 2411 is provided on the first holder wall 241, close to the injection hole 2211, of the tab holder 24. In the second direction y, the first through-hole 2411 is disposed opposite to the injection hole 2211, so that the electrolyte solution is injected into the tab holder 24 through the injection hole 2211 and the first through-hole 2411.

The first through-hole 2411 is provided on the first holder wall 241, close to the injection hole 2211, of the tab holder 24. The first through-hole 2411 is disposed opposite to the injection hole 2211. In this way, after being injected into the housing 22 through the injection hole 2211, the electrolyte solution can enter the tab holder 24 through the first through-hole 2411.

Optionally, in an embodiment of this application, as shown in FIG. 4, the through-hole 2412 may also be provided on another first holder wall 241 of the tab holder 24. The position of this through-hole 2412 does not need to correspond to the injection hole 2211. The through-hole 2412 is intended to allow the electrolyte solution to flow to a side of the electrode assembly 21 through the through-hole 2412 after the electrolyte solution is injected into the tab holder 24, the side being away from the injection hole 2211, thereby increasing the diffusion speed of the electrolyte solution in the housing 22.

Optionally, in an embodiment of this application, a cross-sectional area of the first through-hole 2411 is not less than a cross-sectional area of the opening, close to the interior of the housing 22, of the injection hole 2211.

The cross-sectional area of the first through-hole 2411 is not less than the cross-sectional area of the opening, close to the interior of the housing 22, of the injection hole 2211. This ensures that the space is sufficient for the flow of the electrolyte solution through the first through-hole 2411 after the electrolyte solution enters the housing 22, and ensures the electrolyte solution to enter the tab holder 24 quickly and diffuse faster in the housing 22.

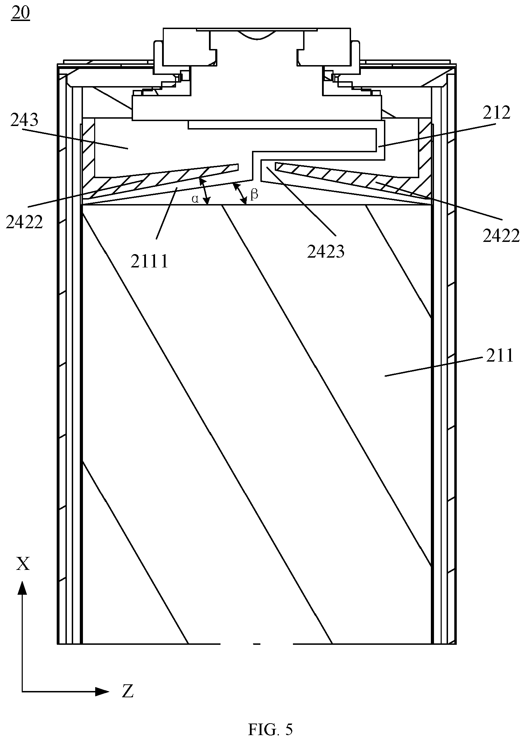

Optionally, in an embodiment of this application, as shown in FIG. 4 and FIG. 5, the tab holder 24 further includes a second holder wall 242 oriented toward the electrode assembly 21. The second holder wall 242 includes a first sub-wall 2421 and a second sub-wall 2422. The first sub-wall 2421 is perpendicular to the first direction x. The second sub-wall 2422 is inclined against the first sub-wall 2421 to form a clearance space 2111 for a root of the tab 212. The root of the tab 212 is disposed in the clearance space 2111.

Generally, in an assembling process of the battery cell 20, the tab 212 needs to be folded to form a stable structure. The root of the folded tab 212 and a surface from which the tab 212 extends of the electrode assembly 21 form a structure similar to an isosceles triangle. The root of the tab 212 is similar to the two legs of the isosceles triangle. In order to avoid the root of the tab 212, as shown in FIG. 5, the two second sub-walls 2422 are inclined against the first sub-wall 2421 at an angle α. The angle α is the same as an inclination angle β at which the root of the tab 212 is inclined against a surface of the electrode assembly 21, and the surface is a surface from which the tab 212 extends. This ensures a sufficient avoidance space available for the root of the tab 212, and also prevents an excess gap from being left near the root of the tab 212, thereby avoiding deformation of the root of the tab 212 during use of the battery 10, where the deformation may result in a short circuit of the battery 10. In this way, the safety of the battery 10 is improved. In addition, the above arrangement makes the space inside the housing 22 fully utilized.

The first sub-wall 2421 may be adaptively connected to a region at which the tab 212 is absent on the electrode assembly 21, so as to ensure a stable connection between the tab holder 24 and the electrode assembly 21.

In an embodiment of this application, the second sub-wall 2422 of the second holder wall 242 is inclined against the first sub-wall 2421 to form a clearance space 2111 for the root of the tab 212, thereby preventing the second holder wall 242 of the tab holder 24 from pressing down on the root of the tab 212 for lack of a gap between the second holder wall 242 and the body portion 211 when the second holder wall comes in contact with the body portion 211 of the electrode assembly 21. The pressing is prone to damage the tab 212 and cause a short circuit. In addition, the first sub-wall 2421 disposed ensures a region of the second holder wall 242, which does not need to avoid the root of the tab 212, to keep a stable connection to the body portion 211 of the electrode assembly 21, thereby ensuring the overall structural stability of the battery cell 20.

Optionally, in an embodiment of this application, as shown in FIG. 4, the first holder wall 241 and the second holder wall 242 close in to form a tab accommodation space 243. A tab clearance groove 2423 is disposed on the second holder wall 242. At least a part of the tab 212 passes through the tab clearance groove 2423 and is accommodated in the tab accommodation space 243.

The first holder wall 241 and the second holder wall 242 close in to form a tab accommodation space 243. At least a part of the tab 212 passes through the tab clearance groove 2423 of the second holder wall 242 and is accommodated in the tab accommodation space 243, thereby utilizing the space of the tab holder 24 efficiently, avoiding a need to waste another space in the housing 22 to accommodate the tab 212, and saving the space occupied by the battery cell 20 as a whole. In addition, the tab accommodation space 243 accommodates the tab 212. The first holder wall 241 and the second holder wall 242 also play a protective role for the tab 212, thereby preventing the tab 212 from being damaged during use of the battery 10 and ensuring the safety of the battery 10.

Optionally, in an embodiment of this application, as shown in FIG. 4, a fluid channel 2424 is disposed on the second holder wall 242, so that the electrolyte solution is able to flow through the fluid channel 2424 to the electrode assembly 21.

Understandably, in FIG. 4, the structure of the fluid channel 2424 in this application is illustrated by using an example in which the fluid channel 2424 is a through-hole flow channel. However, in the technical solution of this application, the structure of the fluid channel 2424 is not limited to the through-hole flow channel shown in FIG. 4. For example, the fluid channel 2424 may be a rectangular flow channel penetrating the second holder wall 242 instead, without being limited herein.

Optionally, a plurality of fluid channels 2424 that run through the second holder wall 242 along the first direction x are disposed on the second holder wall 242 to further speed up diffusion of the electrolyte solution in the housing 22.

Optionally, in an embodiment of this application, still referring to FIG. 4, the tab holder 24 further includes a liquid blocking component 244. In the second direction y, the liquid blocking component 244 is disposed between the two first holder walls 241 and disposed opposite to the first through-hole 2411.

The liquid blocking component 244 is disposed opposite to the first through-hole 2411, so that the electrolyte solution impacts the liquid blocking component 244 when being injected into the tab holder 24 through the first through-hole 2411. In this way, the electrolyte solution is prevented from directly impacting the tab 212 folded and placed in the tab holder 24, thereby avoiding damage to the tab 212.

Optionally, in an embodiment of this application, as shown in FIG. 4, the liquid blocking component 244 includes a fixing structure 2441. The tab holder 24 is fixed to the end cap 23 by the fixing structure 2441.

Understandably, in order to ensure the stability of the connection between the end cap 23 and the tab holder 24, the tab holder 24 may include two symmetrically arranged liquid blocking components 244. In this way, the fixing structures 2441 of the two liquid blocking components 244 are fixedly connected to the end cap 23, thereby ensuring the stability of the connection between the end cap 23 and the tab holder 24.

The tab holder 24 is fixed to the end cap 23 by the fixing structure 2441 of the liquid blocking component 244, thereby improving the stability of the connection between the end cap 23 and the tab holder 24, and improving the overall structural strength of the battery cell 20.

Optionally, the fixed connection between the fixing structure 2441 and the tab holder 24 may be implemented through a connection of a bolt to a screw hole. The fixing structure 2441 may be a screw hole. Alternatively, the fixed connection may be implemented through a connection of a mortise-and-tenon structure. The implementation of the fixed connection is not limited herein.

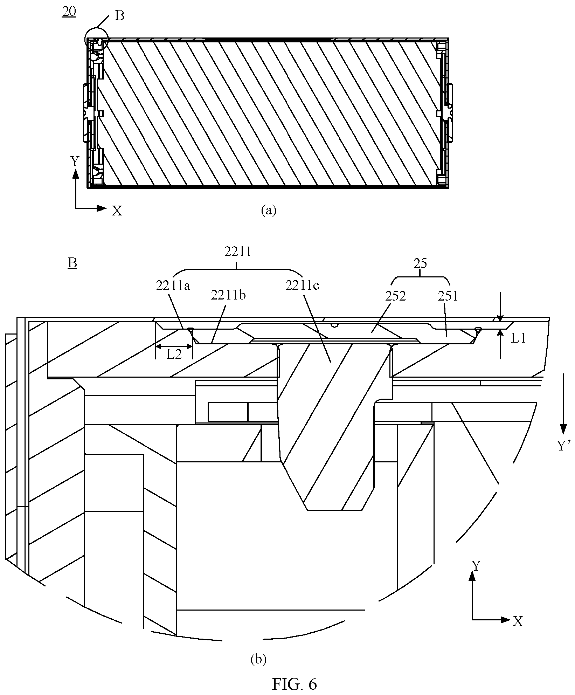

Subfigure (a) of FIG. 6 is a cross-sectional view of a battery cell 20 sectioned along an xy plane. Subfigure (b) of FIG. 6 is a close-up view of a part B shown in subfigure (a) of FIG. 6.

Optionally, in an embodiment of this application, as shown in subfigure (b) of FIG. 6, the injection hole 2211 includes a first hole section 2211a, a second hole section 2211b, and a third hole section 2211c. Along a direction toward the interior of the housing 22 such as the y'-direction (indicated by the arrow) in FIG. 6, the first hole section 2211a, the second hole section 2211b, and the third hole section 2211c are arranged in sequence, with a hole diameter diminishing progressively.

Along the direction toward the interior of the housing 22, the first hole section 2211a, the second hole section 2211b, and the third hole section 2211c of the injection hole 2211 are arranged in sequence, and the hole diameter diminishes progressively, so that the injection hole 2211 includes a plurality of hole sections of different diameters to facilitate an operation of sealing the injection hole 2211 upon completion of injection.

Optionally, in an embodiment of this application, as shown in subfigure (b) of FIG. 6, the battery cell 20 includes a sealing component 25. The sealing component 25 is configured to seal the third hole section 2211c after electrolyte injection. The third hole section 2211c close to the interior of the housing 22 is sealed by using the sealing component 25, thereby preventing the electrolyte solution from flowing out of the battery cell 20 through the injection hole 2211.

Optionally, in an embodiment of this application, the sealing component 25 is welded to the housing 22 to seal the third hole section 2211c. The sealing component 25 is connected to the housing 22 by welding, so as to seal the third hole section 2211c. The welding connection is characterized by strong bonding and high stability and firmness of connection, and makes the sealing component 25 seal the third hole section 2211c more firmly.

Optionally, in an embodiment of this application, as shown in subfigure (b) of FIG. 6, the sealing component 25 includes a welding portion 251. The welding portion 251 is accommodated in the second hole section 2211b and connected to a sidewall of the second hole section 2211b by welding. An excess part of a weld mark exceeding the second hole section 2211b is accommodated in the first hole section 2211a, where the weld mark is formed by welding and connecting the welding portion 251 to the sidewall of the second hole section 2211b.

The welding portion 251 of the sealing component 25 is connected to the sidewall of the second hole section 2211b by welding, so as to connect the sealing component 25 to the housing 22 and seal the third hole section 2211c. In addition, the welding portion 251 is accommodated in the second hole section 2211b, thereby preventing the sealing component 25 from protruding from the outer surface of the first wall 221, and preventing the sealing component 25 from puncturing the insulation film on the outer surface of the housing 22. In addition, the welding portion 251 is connected to the sidewall of the second hole section 2211b by welding to form a weld mark. A part of the weld mark is accommodated in the second hole section 2211b, and another part of the weld mark exceeds the second hole section 2211b. The excess part of the weld mark exceeding the second hole section 2211b is accommodated in the first hole section 2211a, thereby preventing the weld mark from protruding from the outer surface of the first wall 221, preventing the weld mark from puncturing the insulation film on the outer surface of the housing 22, avoiding a short circuit of the battery 10, and ensuring the safety of the battery 10.

Optionally, still referring to subfigure (b) of FIG. 6, the sealing component 25 further includes a flat portion 252. The flat portion may be accommodated in the first hole section 2211a. A plane of the surface of the flat portion 252 coincides with a plane of the outer surface of the housing 22. In this way, the flat portion 252 can play a supporting and heat transfer role for the insulation film wrapped around the housing 22.

Optionally, in an embodiment of this application, as shown in subfigure (b) of FIG. 6, in the second direction y, the dimension L1 of the first hole section 2211a is greater than 0.1 mm. For example, the dimension L1 of the first hole section 2211a in the second direction y is 0.3 mm or 0.5 mm.

Understandably, the above enumerated data of the dimension L1 of the first hole section 2211a in the second direction y is merely for illustrative purposes, but constitutes no limitation on an embodiment of this application. The dimension L1 may be set based on the actual welding situation, so as to meet the requirement of accommodating the welding mark extending beyond the second hole section 2211b. The dimension is not limited herein.

In the second direction y, the dimension of the first hole section 2211a needs to be large enough to accommodate all the excess weld mark exceeding the second hole section 2211b. Based on general sizes of weld marks formed by welding, the dimension L1 of the first hole section 2211a in the second direction y needs to be set to a value greater than 0.1 mm.

Optionally, as shown in subfigure (b) of FIG. 6, in the first direction x, a difference between the dimension of the third hole section 2211c and a maximum dimension of the sealing component 25 in the first direction x is 2L2. This dimension difference is greater than 1 mm, so as to facilitate the welding connection between the sealing component 25 and the sidewall of the second hole section 2211b. For example, the dimension difference may be 1.5 mm or 1.7 mm.

Understandably, the above enumerated data of the dimension difference 2L2 between the dimension of the third hole section 2211c and the maximum dimension of the sealing component 25 in the first direction x is merely for illustrative purposes, but constitutes no limitation on an embodiment of this application. The dimension difference 2L2 may be set based on the actual welding situation, so as to facilitate the welding connection between the sealing component 25 and the sidewall of the second hole section 2211b. The dimension difference is not limited herein.

Optionally, after each injection of the electrolyte solution, the injection hole 2211 may be sealed temporarily with a plastic nail 28 to prevent the electrolyte solution from flowing out through the injection hole 2211. To inject the electrolyte solution for a second time, the plastic nail 28 is taken out. Such operations are iterated until the last injection of the electrolyte solution. After completion of the last injection, before the third hole section 2211c is sealed with the sealing component 25, the third hole section 2211c is sealed with the plastic nail 28. In this way, in sealing the third hole section 2211c with the sealing component 25, the welding slag generated by welding can be prevented from falling into the battery cell, and the electrolyte solution is prevented from overflowing during the welding. The overflow impairs the welding quality.

Optionally, in an embodiment of this application, as shown in FIG. 3, the battery cell 20 further includes an insulation shell 26. The insulation shell 26 is disposed between the housing 22 and the electrode assembly 21. A second through-hole 261 is provided on the insulation shell 26. In the second direction y, the second through-hole 261 is disposed opposite to the injection hole 2211.

As a component that prevents a short circuit of the battery 20 and ensures safety of the battery 20, the insulation shell 26 is disposed between the housing 22 and the electrode assembly 21. A second through-hole 261 opposite to the injection hole 2211 is disposed on the insulation shell 26, thereby preventing the insulation shell 26 from blocking the flow path of the electrolyte solution during injection of the electrolyte solution, and speeding up the diffusion of the electrolyte solution in the housing 22.

Optionally, in an embodiment of this application, as shown in FIG. 3, a plurality of first infiltration holes 262 arranged along the first direction x are provided on the insulation shell 26.

The plurality of first infiltration holes 262 provided on the insulation shell 26 facilitate rapid diffusion of the electrolyte solution in the housing 22, save the time spent in assembling the battery cell 20, and improve the efficiency of assembling the battery 10.

Optionally, in an embodiment of this application, as shown in FIG. 3, the battery cell 20 further includes an insulation plate 27. In the second direction y, the insulation plate 27 is disposed between the housing 22 and the electrode assembly 21. A third through-hole 271 is provided on the insulation plate 27. In the second direction y, the third through-hole 271 is disposed opposite to the injection hole 2211.

The insulation plate 27 disposed in the battery cell 20 plays a role in supporting the electrode assembly 21 and preventing deformation of the electrode assembly 21 on the one hand, and plays a role in insulating, avoiding a short circuit of the battery 10, and ensuring safety of the battery 10 on the other hand. The third through-hole 271 opposite to the injection hole 2211 is provided on the insulation plate 27, thereby preventing the insulation plate 27 from blocking the flow path of the electrolyte solution during injection of the electrolyte solution, and speeding up the diffusion of the electrolyte solution in the housing 22.

Optionally, in an embodiment of this application, as shown in FIG. 3, a plurality of second infiltration holes 272 arranged along the first direction x are provided on the insulation plate 27.

The plurality of second infiltration holes 272 provided on the insulation plate 27 facilitate rapid diffusion of the electrolyte solution in the housing 22, save the time spent in assembling the battery cell 20, and improve the efficiency of assembling the battery 10.

Optionally, in an embodiment of this application, in the first direction x, the first infiltration holes 262 of the insulation shell 26 are staggered from the second infiltration holes 272 of the insulation plate 27, so that an insulation component is ensured to be available between the electrode assembly 21 and the housing 22 to avoid a short circuit of the battery 10.

Optionally, in an embodiment of this application, two injection holes 2211 may be provided on the first wall 221, and arranged at two ends of the first wall 221 respectively, the two ends being close to the opening of the housing 22. The two injection holes 2211 arranged for injecting the electrolyte solution simultaneously save the time of injection and improve the production efficiency of the battery 10.

An embodiment of this application further provides a battery 10. The battery 10 may include the battery cell 20 disclosed in any one of the foregoing embodiments. In some embodiments, the battery 10 may further include other structures such as a box and a busbar component, details of which are omitted here.

An embodiment of this application further provides an electrical device. The electrical device may include the battery 10 disclosed in any one of the foregoing embodiments. Optionally, the electrical device may be a vehicle 1, watercraft, spacecraft, or the like, but the type of the electrical device is not limited herein.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell (20), **characterized in that**:
the battery cell comprises:
an electrode assembly (21); and
a housing (22), configured to accommodate the electrode assembly (21),
wherein:
an injection hole (2211) is provided on a first wall (221) of the housing (22);
the electrode assembly (21) comprises a body portion (211); and
an orthographic projection of an opening, close to an interior of the housing (22), of the injection hole (2211) is staggered from an orthographic projection of the body portion (211) on the first wall (221).

2. The battery cell (20) according to claim 1, wherein:
the electrode assembly (21) further comprises a tab (212) extending from the body portion (211); and
the battery cell (20) further comprises a tab holder (24), the tab holder (24) and the body portion (211) are arranged along a first direction (x), and at least a part of the tab (212) is accommodated in the tab holder (24).

3. The battery cell (20) according to claim 2, wherein the tab holder (24) comprises two first holder walls (241) disposed opposite to each other along a second direction (y), an orthographic projection of an opening, close to the interior of the housing (22), of the injection hole (2211) on a plane of an outer surface of the first holder wall (241) does not extend beyond the first holder wall (241), and the second direction (y) is perpendicular to the first direction (x) and the first wall (221).

4. The battery cell (20) according to claim 3, wherein a first through-hole (2411) is provided on a first holder wall (241), close to the injection hole (2211), of the tab holder (24), and the first through-hole (2411) and the injection hole (2211) are disposed opposite to each other in the second direction (y).

5. The battery cell (20) according to claim 4, wherein a cross-sectional area of the first through-hole (2411) is not less than a cross-sectional area of the opening, close to the interior of the housing (22), of the injection hole (2211).

6. The battery cell (20) according to any one of claims 3 to 5, wherein:
the tab holder (24) further comprises a second holder wall (242) oriented toward the electrode assembly (21); and
the second holder wall (242) comprises a first sub-wall (2421) and a second sub-wall (2422), the first direction (x) is perpendicular to the first sub-wall (2421), the second sub-wall (2422) is inclined against the first sub-wall (2421) to form a clearance space for a root of the tab (212), and the root of the tab (212) is disposed in the clearance space.

7. The battery cell (20) according to claim 6, wherein the first holder wall (241) and the second holder wall (242) close in to form a tab accommodation space (243), a tab clearance groove (2423) is disposed on the second holder wall (242), and at least a part of the tab (212) passes through the tab clearance groove (2423) and is accommodated in the tab accommodation space (243).

8. The battery cell (20) according to claim 6 or 7, wherein a fluid channel (2424) is disposed on the second holder wall (242), so that an electrolyte solution is able to flow through the fluid channel (2424) to the electrode assembly (21).

9. The battery cell (20) according to claim 8, wherein a plurality of the fluid channels (2424) are disposed, and the plurality of fluid channels (2424) run through the second holder wall (242) along the first direction (x).

10. The battery cell (20) according to any one of claims 3 to 9, wherein:
the tab holder (24) further comprises a liquid blocking component (244); and
in the second direction (y), the liquid blocking component (244) is disposed between the two first holder walls (241) and disposed opposite to the first through-hole (2411).

11. The battery cell (20) according to any one of claims 3 to 10, wherein:
the injection hole (2211) comprises a first hole section (2211a), a second hole section (2211b), and a third hole section (2211c); and
along a direction toward the interior of the housing (22), the first hole section (2211a), the second hole section (2211b), and the third hole section (2211c) are arranged in sequence, with a hole diameter diminishing progressively.

12. The battery cell (20) according to claim 11, wherein the battery cell (20) comprises a sealing component (25), and the sealing component (25) is configured to seal the third hole section (2211c) after electrolyte injection.

13. The battery cell (20) according to claim 12, wherein the sealing component (25) is welded to the housing (22) to seal the third hole section (2211c).

14. The battery cell (20) according to claim 13, wherein:
the sealing component (25) comprises a welding portion (251), and the welding portion (251) is accommodated in the second hole section (2211b) and connected to a sidewall of the second hole section (2211b) by welding; and
an excess part of a weld mark exceeding the second hole section (2211b) is accommodated in the first hole section (2211a), and the weld mark is formed by welding and connecting the welding portion (251) to the sidewall of the second hole section (2211b).

15. The battery cell (20) according to any one of claims 11 to 14, wherein in the second direction (y), a dimension of the first hole section (2211a) is greater than 0.1 mm.

16. The battery cell (20) according to any one of claims 3 to 15, wherein the battery cell (20) further comprises an insulation shell (26), the insulation shell (26) is disposed between the housing (22) and the electrode assembly (21), a second through-hole (261) is provided on the insulation shell (26), and, in the second direction (y), the second through-hole (261) is disposed opposite to the injection hole (2211).

17. The battery cell (20) according to claim 16, wherein a plurality of first infiltration holes (262) arranged along the first direction (x) are provided on the insulation shell (26).

18. The battery cell (20) according to claim 16 or 17, wherein:
the battery cell (20) further comprises an insulation plate (27);
in the second direction (y), the insulation plate (27) is disposed between the housing (22) and the electrode assembly (21);
a third through-hole (271) is provided on the insulation plate (27); and
in the second direction (y), the third through-hole (271) is disposed opposite to the injection hole (2211).

19. The battery cell (20) according to claim 18, wherein a plurality of second infiltration holes (272) arranged along the first direction (x) are provided on the insulation plate (27).

20. The battery cell (20) according to claim 19, wherein in the first direction (x), first infiltration holes (262) of the insulation shell (26) are staggered from the second infiltration holes (272) of the insulation plate (27).

21. The battery cell (20) according to any one of claims 3 to 20, wherein:
the battery cell (20) further comprises an end cap (23) configured to fit and cover an opening of the housing (22), and an electrode terminal is disposed on the end cap (23); and
in the first direction (x), the tab holder (24) is disposed between the end cap (23) and the body portion (211), and the tab (212) of the electrode assembly (21) passes through the tab holder (24) and is electrically connected to the electrode terminal.

22. A battery, comprising the battery cell (20) according to any one of claims 1 to 21.

23. An electrical device, comprising the battery according to claim 22, and the battery is configured to provide electrical energy.
